# EUROPÄISCHE PATENTSCHRIFT

(11) **EP 0 612 388 B1**
(45) Veröffentlichungstag und Bekanntmachung des Hinweises auf die Patenterteilung: **27.12.1995**
(21) Anmeldenummer: 92918793.8
(22) Anmeldetag: 08.09.1992
(51) Int. Cl.: F16K 17/04, F16K 17/08, F16K 15/14

(54) **DRUCKBEGRENZUNGSVENTIL IN SITZBAUWEISE**
SEAT-TYPE PRESSURE-RELIEF VALVE
SOUPAPE DE LIMITATION DE PRESSION A SIEGE

(30) Priorität: 11.11.1991 DE 4136979
(43) Veröffentlichungstag der Anmeldung: 31.08.1994
(73) Patentinhaber: ROBERT BOSCH GMBH, 70442 Stuttgart (DE)
(72) Erfinder: MÜLLER, Martin, D-7140 Ludwigsburg (DE)
(86) Internationale Anmeldenummer: DE9200757
(87) Internationale Veröffentlichungsnummer: WO9310386

(56) Entgegenhaltungen:
- DE-C- 447 568
- FR-A- 1 250 175
- GB-A- 813 671
- GB-A- 1 159 992
- GB-A- 2 013 838
- US-A- 2 074 292
- US-A- 2 563 665

## Beschreibung

### Stand der Technik

Die Erfindung geht aus von einem Druckbegrenzungsventil in Sitzbauweise nach der Gattung des Hauptanspruchs. Ein derartiges Druckbegrenzungsventil ist aus der GB-A-813 671 bekannt. Das darin beschriebene Druckbegrenzungsventil hat ein kugelförmiges Ventilglied, das von einer Membran mit einem entsprechenden Aufnahmeraum für das Ventilglied geführt ist. An dieser Membran liegt auf der dem Ventilglied abgewandten Seite ein Federelement an, das die Membran bzw. das Ventilglied gegen den einwirkenden Druck beaufschlagt. Ein Führungselement zwischen Feder und Membran liegt bei Überschreiten eines vorgegebenen Druckes an einem Anschlag an. Derartige Druckbegrenzungsventile werden eingesetzt, wenn hohe Anforderungen an geringe Verschmutzungsempfindlichkeit, kleine Stellwege sowie kurze Ansprechzeiten gestellt werden. Insbesondere wenn die Anforderungen an die Verschmutzungsunempfindlichkeit hoch sind, das heißt beim Einsatz derartiger Druckbegrenzungsventile in verschmutzten Druckmittelkreisläufen, versucht man, auf jegliche enge Führung des Ventilgliedes zu verzichten. Das führt dann aber dazu, daß die Ventilglieder zum Verklemmen neigen. Auch die Anforderung an eine gute Anlage des Ventilgliedes an den Ventilsitz (Dichtheit) genügt dann nicht immer allen Ansprüchen.

### Vorteile der Erfindung

Das erfindungsgemäße Druckbegrenzungsventil in Sitzbauweise mit den kennzeichnenden Merkmalen des Hauptanspruchs hat demgegenüber den Vorteil, daß trotz geringer Verschmutzungsempfindlichkeit eine gute und sichere Anlage des Ventilgliedes an den Ventilsitz gewährleistet ist. Das erfindunsgemäße Druckbegrenzungsventil zeigt darüberhinaus keine Neigung zum Verklemmen und zeichnet sich durch einfachen und kompakten Aufbau aus.

Weitere Vorteile und vorteilhafte Weiterbildungen der Erfindung ergeben sich aus den Unteransprüchen und der Beschreibung.

### Zeichnung

Ausführungsbeispiele der Erfindung sind in der nachfolgenden Beschreibung und Zeichnung näher erläutert. Letztere zeigt in Figur 1 ein erstes Ausführungsbeispiel eines erfindungsgemäßen Druckbegrenzungsventils im Schnitt, das in eine schematisch dargestellte hydraulische Stelleinrichtung eingesetzt ist. Figur 2 zeigt ein zweites Ausführungsbeispiel eines erfindungsgemäßen Druckbegrenzungsventils im Schnitt und Figur 3 ein Federelement dieses zweiten Ausführungsbeispiels. Die Figuren 4 und 5 zeigen ein drittes und ein viertes Ausführungsbeispiel, jeweils im Schnitt.

### Beschreibung der Ausführungsbeispiele

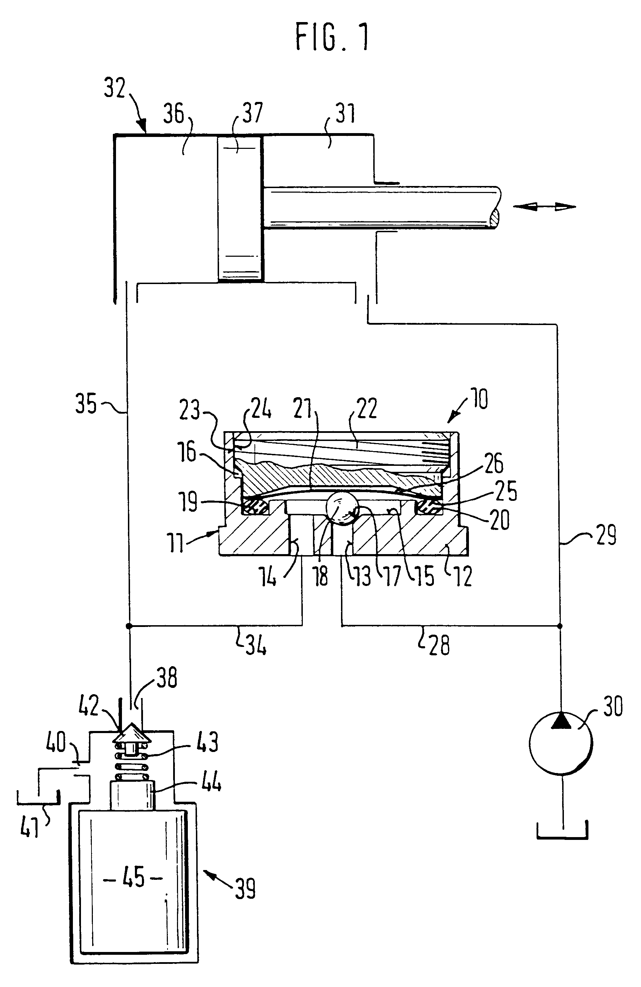

Das in Figur 1 dargestellte Druckbegrenzungsventil 10 hat ein etwa topfförmiges Gehäuse 11, dessen Boden 12 von einer mittigen Bohrung 13 und einer außermittigen Bohrung 14 durchdrungen ist. Diese Bohrungen münden in eine Vertiefung 15, die vom Innenraum 16 des Gehäuses 11 ausgehend in den Boden 12 eingelassen ist.

Die mittige Bohrung 13 ist zur Vertiefung 15 hin kegelförmig erweitert. Diese Erweiterung dient als Ventilsitz 17 und wirkt mit einem Ventilglied 18 zusammen, das in diesem Ausführungsbeispiel als Kugel ausgebildet ist.

In den Boden 12 des Gehäuses 11 ist weiterhin eine vom Innenraum 16 ausgehende Ringnut 19 eingelassen, in die ein Dichtring 20 eingelegt ist. Der Außendurchmesser der Ringnut 19 entspricht dem Durchmesser des Innenraums 16, und sie verläuft konzentrisch zur Vertiefung 15. Auf dem Dichtring 20 liegt mit ihrem Rand eine scheibenförmige Membran 21 auf, die auch auf dem Ventiglied 18 aufliegt.

Durch einen Gehäusedeckel 22 wird das Gehäuse 11 verschlossen und gleichzeitig die Membran 21 an den Dichtring 20 gepreßt. Dazu ist der Gehäusedeckel 22 etwa zylinderförmig ausgebildet und mit einem Außengewinde 23 in ein entsprechendes Innengewinde 24 des Gehäuses 11 eingeschraubt.

In die dem Boden 12 zugewandte Stirnseite 25 des Gehäusedeckels 22 ist eine etwa kegelstumpfförmige Vertiefung 26 eingelassen, deren Außendurchmesser etwas größer ist als der Innendurchmesser der Ringnut 19.

Die mittige Bohrung 13 im Gehäuse 11 ist mit einer Leitung 28 verbunden, die von einer Druckleitung 29 abzweigt. Durch diese Druckleitung 29 wird Druckmittel von einer Pumpe 30 in den Ringraum 31 eines Differentialzylinders 32 gefördert.

Die außermittige Bohrung 14 ist mit einer Leitung 34 verbunden, die von einer Druckleitung 35 abzweigt. Diese verbindet den größeren Druckraum 36 am Differentialkolben 37 des Differentialzylinders 32 mit dem Eingang 38 eines elektromagnetisch betätigbaren Proportionaldruckregelventils 39, dessen Ausgang 40 mit einem Behälter 41 verbunden ist. Dieses weist ein Ventilglied 42 auf, das von einer Feder 43 im Schließsinn belastet ist, die sich an einem Stößel 44 des Elektromagneten 45 des Proportionaldruckregelventils 39 abstützt.

Eine derartige hydraulische Stelleinrichtung ist in der nicht vorveröffentlichten DE 41 28 656 A1 beschrieben und dient zur Betätigung einer Einrichtung zur Verstellung der Nockenwelle eines Kraftfahrzeuges relativ zu dessen Kurbelwelle.

Für eine Verstellung des Differentialkolbens 37 nach links (Figur 1) wird das Proportionaldruckregelventil 39 drucklos geschaltet. Damit ist auch der Druckraum 36 des Differentialzylinders 32 drucklos, d.h. die Feder 43 ist bei nicht erregtem Elektromagneten 45 nicht oder nur sehr gering vorgespannt. Dadurch können bereits sehr geringe Drücke am Eingang 38 das Ventilglied 42 in Öffnungsrichtung bewegen. Im Ringraum 31 des Differentialzylinders 32 kann sich über die Druckleitung 29 ein von der Pumpe 30 erzeugter Druck aufbauen. Dieser Druck ist abhängig von dem am Druckbegrenzungsventil 10 eingestellten Druck. Durch entsprechendes Einschrauben des Gehäusedeckels 22 kann die Membran 21 vorgespannt werden, so daß auf das Ventilglied 18 eine bestimmte Schließkraft wirkt. Übersteigt der Druck in der Leitung 28 einen bestimmten Wert, so daß die von diesem Druck erzeugte Kraft auf das Ventilglied 18 größer ist als die durch die vorgespannte Membran 21 erzeugte Schließkraft, wird das Ventilglied 18 von seinem Ventilsitz 17 abgehoben. Dadurch kann Druckmittel von der Leitung 28 durch die Bohrung 13 am geöffneten Ventilsitz 17 vorbei in den Innenraum 16 gelangen. Über die Bohrung 14 und die Leitung 34 besteht dann eine Verbindung zur Druckleitung 35 bzw. zum drucklos geschalteten Proportionaldruckregelventil.

Wird durch entsprechendes Einschrauben des Gehäusedeckels 22 und durch die vorherige Abstimmung der Membranabmessungen der Öffnungsdruck des Ventilgliedes 18 auf ca. 30 bar eingestellt, baut sich dieser Druck aufgrund der Wirkung der Pumpe 30 auch im Ringraum 31 auf, so daß der Differentialkolben 37 nach links verstellt wird.

Für eine Verstellbewegung des Differentialkolbens 37 nach rechts wird der Öffnungsdruck des Proportionaldruckregelventils 39 auf ca. 70 bar eingestellt. Der Elektromagnet 45 des Proportionaldruckregelventils 39 wird dann von einem Strom bestimmter Stärke durchflossen, so daß die Feder 43 vorgespannt wird. Die Vorspannung der Feder 43 wird dann so groß, daß das Ventilglied 43 erst bei einem Druck von etwa 70 bar am Eingang 38 in Öffnungsrichtung bewegt wird. Die Vorspannung und die Abmessungen der Membran 21 des Druckbegrenzungsventils 10 sind so gewählt, daß die Membran 21 am Gehäusedeckel 22 bzw. der Vertiefung 26 anliegt, wenn der Druck im Innenraum 16 bzw. in der Bohrung 14 größer als etwa 10 bar ist. Die Druckbegrenzungsfunktion ist damit aufgehoben. Es besteht daher nahezu freier Durchgang durch das Druckbegrenzungsventil, so daß gleicher Druck im Druckraum 36 und im Ringraum 31 ansteht. Durch die größere wirksame Fläche des Differentialkolbens 37 an der dem Druckraum 36 zugewandten Seite wird dieser nach rechts bewegt.

Soll der Differentialkolben 37 gegen eine aus der Einrichtung zur Verstellung der Nockenwelle rückwirkende, nach links gerichtete Kraft in stationärer Stellung gehalten werden, wird das Proportionaldruckregelventil 39 auf einen Öffnungsdruck von etwa 20 bar eingestellt. Dieser Druck kann sich dann im Druckraum 36 und im Ringraum 31 aufbauen, da wie zuvor beschrieben, die Druckbegrenzungsfunktion des Druckbegrenzungsventils 10 bei einem ablaufseitigen Druck von mehr als 10 bar aufgehoben ist. Durch den sich aufbauenden Druck im Ringraum 31 kann die nach links gerichtete Kraft auf den Differentialkolben 37 ausgeglichen werden.

Das Druckbegrenzungsventil 10 kann bei vorgegebenen Abmessungen von Innenraum 16, Ventilsitzdurchmesser, Membranfläche und -stärke durch entsprechendes Einschrauben des Gehäusedeckels 22 vorgespannt werden. Die dem Ventilglied 18 zugewandte Seite der Membran 21 wird mit Druckmittel beaufschlagt. Die gegenüberliegende Seite ist über die Spalte zwischen Gehäusedeckel 22 und Gehäuse 11 mit dem Umgebungsdruck verbunden. Durch die Einspannung der Membran 21 zwischen Gehäusedeckel 22 und Ringdichtung 20 wird Druckmittelverlust verhindert. Dadurch, daß die Membran bei Überschreiten eines bestimmten Maximaldruckes im Zulauf 13 und auch bei Überschreiten eines vorbestimmten Druckes im Ablauf 14 an dem Gehäusedeckel 22 anliegt, kann das Druckbegrenzungsventil sehr kurz und kompakt bauen. Das Ventilglied 18 ist relativ frei geführt, so daß keine verschmutzungsempfindlichen Führungsspalte notwendig sind. Dennoch ist bei geeigneten Abmessungen von Ventilsitz 17, Ventilglied 18 und Ventilgliedweg eine sichere Anlage des Ventilgliedes an den Sitz gewährleistet.

In einer Abwandlung des vorbeschreibenen Ausführungsbeispiels ist es auch möglich, das Ventilglied 18 zylindrisch auszubilden und die mit dem Ventilsitz 17 zusammenwirkende Stirnfläche kegelförmig zu gestalten. Dieses Ventilglied wird dann vorteilhafter Weise an der Membran 21 befestigt.

Es ist auch möglich, den Ventilsitz 17 nicht als kegelförmige Vertiefung, sondern als Ringschneide auszubilden, die in den Innenraum 16 ragt. Auf diese Ringschneide kann sich dann die Membran 21 direkt auflegen und somit selbst als Ventilglied wirken.

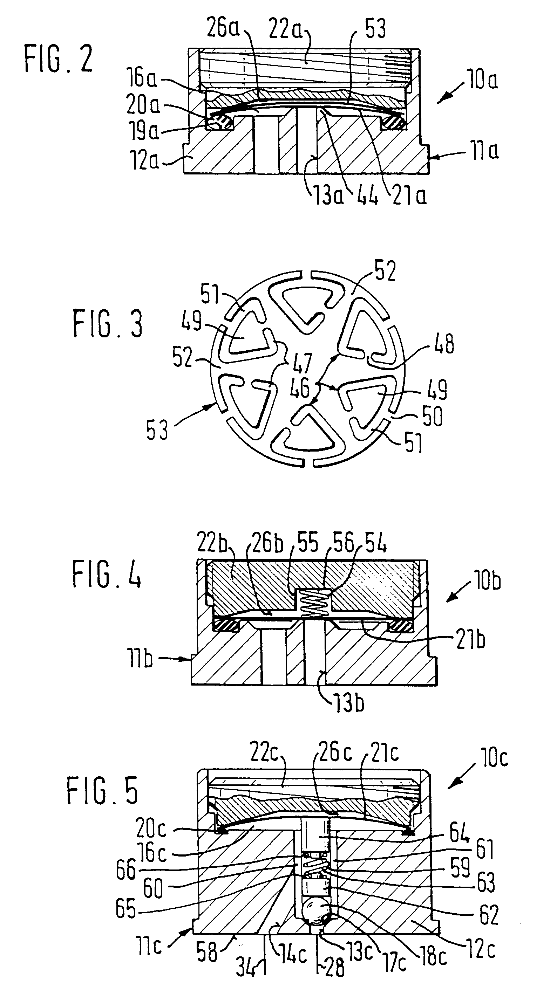

In Figur 2 ist ein ähnlich aufgebautes Druckbegrenzungsventil 10a dargestellt. Am Boden 12a des Gehäuses 11a ist eine in den Innenraum 16a weisende Ringschneide 44 ausgebildet, die die mittige Bohrung 13a umgibt. In den Boden 12a ist ebenfalls eine Ringnut 19a eingelassen, in die ein Dichtring 20a eingelegt ist. Auf diesem Dichtring 20a liegt eine scheibenförmige Membran 21a auf, die auch auf der als Ventilsitz wirkenden Ringschneide 44 aufliegt und mit dieser als Ventilglied zusammenwirkt. Auf die Membran 21a ist - auf der dem Boden 12a abgewandten Seite - eine - in Figur 3 näher dargestellte - Federscheibe 53 aufgelegt. Der Durchmesser dieser Federscheibe 53 entspricht dem der Membran 21a.

Die Federscheibe 53 hat sechs gleichmäßig über den Umfang verteilte dreieckförmige Einschnitte 46, wobei an einer Dreieckseite 47 jeweils ein schmaler Steg 48 verbleibt. Durch diesen Steg 48 bleibt das vom Einschnitt 47 umgebene Innendreieck 49 mit der Federscheibe 53 verbunden. Vom Außenumfang der Federscheibe 53 geht jeweils ein Radialeinschnitt 50 aus, der mit der dem Außenumfang zugewandten Seite 51 des Einschnitts 46 verbunden ist. Dadurch werden sechs Federarme 52 ausgebildet.

Das Druckbegrenzungsventil 10a ist ebenfalls mit einem Gehäusedeckel 22a verschlossen, der auch eine der Membran 21a zugewandte kegelstumpfförmige Vertiefung 26a hat.

Durch die Federscheibe 45 wird die Membran 21a bei Druckbelastung auf annähernd der gesamten Fläche abgestützt. Die Innendreiecke 49 sind über die Stege 48 mit den Federarmen 52 verbunden, so daß beide bei Durchbiegung der Federscheibe 53 etwa die gleiche Neigung haben.

In Figur 4 ist ein drittes Ausführungsbeispiel des Druckbegrenzungsventils beschrieben, bei dem die Membranscheibe relativ eben und nicht vorgespannt eingebaut ist. Ihre Federwirkung ist gering. Die Vorspannkraft wird im wesentlichen über eine Schraubenfeder 54 aufgebracht. Dazu ist in die Vertiefung 26b im Gehäusedeckel 22b eine Sackbohrung 55 eingebracht, die achsgleich zur mittigen Bohrung 13b im Gehäuse 11b verläuft. In diese Sackbohrung 55 ist die Schraubenfeder 54 eingesetzt, die einerseits am Boden 56 der Sackbohrung 55 und andererseits an der Membran 21b anliegt.

Beim vierten Ausführungsbeispiel nach Figur 5 ist im Boden 12c des Gehäuses 11c eine mittige, vom Innenraum 16c ausgehende Stufenbohrung 13c ausgebildet. Die in der Nähe der Gehäuseunterseite 58 befindliche Stufe der Stufenbohrung 13c ist kegelförmig und dient als Ventilsitz 17c.

Neben dem oberhalb des Ventilsitzes 17c verlaufenden größeren Abschnitt 59 der Stufenbohrung 13c verlaufen parallel zu dieser zwei Längsschlitze 60, 61. Die beiden Längsschlitze 60, 61 liegen einander gegenüber und sind jeweils über ihre gesamte Länge mit dem Abschnitt 59 der Stufenbohrung 13c verbunden.

In den Längsschlitz 60 und damit in den Abschnitt 59 der Stufenbohrung 13c mündet die schräg verlaufende Bohrung 14c oberhalb vom Ventilsitz 17c. Die Bohrung 14c geht von der Unterseite 58 des Gehäuses 11c aus und ist mit der Leitung 34 verbunden.

In den Abschnitt 59 der Stufenbohrung 13c sind hintereinander liegend eingesetzt, das kugelförmige Ventilglied 18c, ein erster Führungskolben 62, eine Druckfeder 63 und ein zweiter Führungskolben 64.

Das kugelförmige Ventilglied 18c liegt am Ventilsitz 17c an. An der gegenüberliegenden Seite liegt der erste Führungskolben 62 am Ventilglied an. Auf der gegenüberliegenden Stirnseite 65 des ersten Führungskolbens 62 stützt sich das eine Ende der Druckfeder 63 ab, deren anderes Ende an der Stirnseite 66 des zweiten Führungskolbens 64 anliegt.

Der zweite Führungskolben 64 ragt bis in den Innenraum 16c des Gehäuses 11c. Dort wirkt er mit der Membran 21c zusammen, deren Rand auf dem Dichtring 20c aufliegt. Auch das Gehäuse 11c ist durch einen Gehäusedeckel 22c mit kegelstumpfförmiger Vertiefung 26c verschlossen.

Die Führungskolben 62 und 64 brauchen keinerlei Dichtungsfunktionen zu erfüllen, daher kann ihre Führung im Abschnitt 59 der Stufenbohrung 13c mit relativ großen Ringspalten (keine engen, verschmutzungsempfindlichen Passungen) erfolgen.

Die Membran 21c wird - wie bei den ersten Ausführungsbeispielen - durch entsprehendes Einschrauben des Gehäusedeckels 22c vorgespannt.

Durch diese Ausbildung des Druckbegrenzungsventils kann die Auswirkung des Druckes in der Leitung 34 (Ablaufdruck) auf die Schließwirkung des Ventilgliedes 18c eingestellt werden. Druck in der Leitung 34 wirkt über die Längsschlitze 60, 61 und den Abschnitt 59 der Stufenbohrung 13c auch im Innenraum 16c. Durch diesen Druck wird die Membran 21c in Richtung Gehäusedeckel 22c gewölbt. Dadurch kann sich die Druckfeder 63 längen, so daß deren Vorspannung nachläßt und sich die auf das Ventilglied 18c wirkende Schließkraft verringert.

Durch geeignete Dimensionierung der wirksamen Druckfläche A am Ventilglied 18c (A in m²), der Federsteifigkeit c der Druckfeder 63 (c in N/m) und der Membransteifigkeit bzw. Membrandurchbiegung K der Membran 21c (K in m/Pa) kann die auf das Ventilglied wirkende Schließkraft in Abhängigkeit vom Ablaufdruck beeinflußt werden.

Werden die wirksame Druckfläche A, die Federsteifigkeit c und die Membransteifigkeit K so gewählt, daß K gleich dem Quotienten aus A und c (K=A/c), ergibt sich Rückwirkungsfreiheit des Ablaufdruckes auf die Schließkraft der Kugel. Bei dieser Dimensionierung halten sich die abnehmende Schließkraft durch Längung der Feder 63 und die Zunahme der Schließkraft durch Vergrößerung des Ablaufdruckes das Gleichgewicht.

Bei Verwendung des Druckbegrenzungsventils 10c in einer hydraulischen Stelleinrichtung zur Verstellung der Nockenwelle eines Kraftfahrzeuges ergeben sich energetische Vorteile, wenn Druck im Ablauf eine Verringerung der Kolbenschließkraft bewirkt. Das wird erreicht, wenn die Membransteifigkeit K kleiner als der Quotient aus der wirksamen Druckfläche A und der Federsteifigkeit c der Druckfeder 63 ist (K<A/c).

Entsprechend kann auch durch entsprechende Dimensionierung (K>A/c) eine Erhöhung der Schließkraft erreicht werden.

## Patentansprüche

1. Druckbegrenzungsventil in Sitzventilbauweise mit einem von einem Federmittel belasteten Ventilglied (18, 18a bis 18c, 21a, 21b), das einen Druckmittelstrom von einem Ablauf (14, 14a bis 14c) zu einem Zulauf (13, 13a bis 13c) verhindert und bei Überschreiten eines vorgegebenen Druckes einen Druckmittelstrom vom Zulauf zum Ablauf freigibt, wobei das Ventilglied mit einer an ihrem Rand eingespannten, Membran (21, 21a bis 21c) zusammenwirkt, dadurch gekennzeichnet, daß die Membran (21, 21a bis 21c) das Federmittel bildet, beim Überschreiten eines vorgegebenen Maximaldruckes an einer Anschlagfläche (26, 26a bis 26c) anliegt, im Bereich der Einspannstelle auf einem Dichtring (20, 20a bis 20c) aufliegt und daß die Vorspannung der Membran (21, 21a bis 21c) durch ein Einstellmittel (22, 22a bis 22c) veränderbar ist.

2. Druckbegrenzungsventil nach Anspruch 1, dadurch gekennzeichnet, daß die Membran (21a) an der dem Ventilsitz (17a) abgewandten Seite an einer Federscheibe (53) anliegt.

3. Druckbegrenzungsventil nach Anspruch 1, dadurch gekennzeichnet, daß die Membran (21b) auf der dem Ventilsitz abgewandten Seite von einer Druckfeder (54) belastet ist.

4. Druckbegrenzungsventil nach einem der Ansprüche 1 bis 3, dadurch gekennzeichnet, daß ein Teil der Membran (21a, 21b) das Ventilglied bildet.

5. Druckbegrenzungsventil nach einem der Ansprüche 1 bis 3, dadurch gekennzeichnet, daß das Ventilglied (18, 18c) eine Ventilkugel ist.

6. Druckbegrenzungsventil nach einem der Ansprüche 1 bis 3, dadurch gekennzeichnet, daß das Ventilglied zumindestens teilweise kegelförmig ausgebildet ist.

7. Druckbegrenzungsventil nach einem der Ansprüche 1 bis 6, dadurch gekennzeichnet, daß ein Druck im Zulauf (13, 13a bis 13c) sowie ein Druck im Ablauf (14, 14a bis 14c) die Membran (21, 21a bis 21c) auf der gleichen Seite beaufschlagen.

8. Druckbegrenzungsventil nach einem der Ansprüche 1 bis 7, dadurch gekennzeichnet, daß zwischen der Membran (21c) und dem Ventilglied (18c) ein weiteres Federmittel (63) angeordnet ist.

## Claims

1. Seat-valve style pressure-relief valve, having a spring-means-loaded valve member (18, 18a to 18c, 21a, 21b), which prevents a pressure-medium flow from an outflow (14, 14a to 14c) to an inflow (13, 13a to 13c) and, whenever a predefined pressure is exceeded, releases a pressure-medium flow from the inflow to the outflow, the valve member interacting with a diaphragm (21, 21a to 21c) which is clamped in place by its rim, characterized in that the diaphragm (21, 21a to 21c) forms the spring means, bears against a stop face (21, 21a to 21c) whenever a predefined maximum pressure is exceeded and bears, in the region of the clamping point, upon a sealing ring (20, 20a to 20c), and in that the pretensioning of the diaphragm (21, 21a to 21c) can be altered by an adjusting means (22, 22a to 22c).

2. Pressure-relief valve according to Claim 1, characterized in that the diaphragm (21a), on the side facing away from the valve seat (17a), bears against a spring washer (53).

3. Pressure-relief valve according to Claim 1, characterized in that the diaphragm (21b), on the side facing away from the valve seat, is loaded by a compression spring (54).

4. Pressure-relief valve according to one of Claims 1 to 3, characterized in that a part of the diaphragm (21a, 21b) forms the valve member.

5. Pressure-relief valve according to one of Claims 1 to 3, characterized in that the valve member (18, 18c) is a ball valve.

6. Pressure-relief valve according to one of Claims 1 to 3, characterized in that the valve member is of at least partially conical construction.

7. Pressure-relief valve according to one of Claims 1 to 6, characterized in that a pressure in the inflow (13, 13a to 13c) and a pressure in the outflow (14, 14a to 14c) act upon the diaphragm (21, 21a to 21c) on the same side.

8. Pressure-relief valve according to one of Claims 1 to 7, characterized in that between the diaphragm (21c) and the valve member (18c) there is disposed a further spring means (63).

## Revendications

1. Soupape de limitation de pression à siège avec un organe de soupape (18, 18a à 18c, 21a, 21b) sollicité par un ressort, qui empêche un écoulement de fluide sous pression d'une sortie (14, 14a à 14c) vers une entrée (13, 13a à 13c) et qui, lors du dépassement d'une pression prédéfinie, libère un écoulement de fluide sous pression de l'entrée vers la sortie, l'organe de soupape coopérant avec une membrane (21, 21a à 21c) fixée sur son bord, soupape de limitation de pression caractérisée en ce que la membrane (21, 21a à 21c) constitue le ressort, s'applique sur une surface de butée (26, 26a à 26c) lors du dépassement d'une pression maximale prédéfinie, et s'applique dans la zone de son emplacement de fixation sur un joint d'étanchéité annulaire (20, 20a à 20c), et en ce que la précontrainte de la membrane (21, 21a à 21c) est susceptible d'être modifiée par un moyen de réglage (22, 22a à 22c).

2. Soupape de limitation de pression selon la revendication 1, caractérisée en ce que la membrane (21a) s'applique, par son côté opposé au siège de soupape (17a), sur un disque élastique (53).

3. Soupape de limitation de pression selon la revendication 1, caractérisée en ce que la membrane (21b) est sollicitée, sur son côté opposé au siège de soupape, par un ressort de pression (54).

4. Soupape de limitation de pression selon l'une des revendications 1 à 3, caractérisée en ce qu'une partie de la membrane (21a, 21b) constitue l'organe de soupape.

5. Soupape de limitation de pression selon l'une des revendications 1 à 3, caractérisée en ce que l'organe de soupape (18, 18c) est une sphère.

6. Soupape de limitation de pression selon l'une des revendications 1 à 3, caractérisée en ce que l'organe de soupape est réalisé, tout au moins partiellement, sous la forme d'un cône.

7. Soupape de limitation de pression selon l'une des revendications 1 à 6, caractérisée en ce qu'une pression à l'entrée (13, 13a à 13c) ainsi qu'une pression à la sortie (14, 14a à 14c) sollicitent la membrane (21, 21a à 21c) sur le même côté.

8. Soupape de limitation de pression selon l'une des revendications 1 à 7, caractérisée en ce qu'entre la membrane (21c) et l'organe de soupape (18c) est disposé un autre ressort (63).
